Europäisches Patentamt

(19) European Patent Office

Office européen des brevets

(11) Numéro de publication: **0 403 379**
**A1**

## (12) DEMANDE DE BREVET EUROPEEN

(21) Numéro de dépôt: **90401639.1**

(22) Date de dépôt: **13.06.90**

(51) Int. Cl.5: **F16L 23/04**

(30) Priorité: **13.06.89 FR 8907811**

(43) Date de publication de la demande:
**19.12.90 Bulletin 90/51**

(84) Etats contractants désignés:
**DE ES GB IT**

(71) Demandeur: **ECIA - EQUIPEMENTS ET COMPOSANTS POUR L'INDUSTRIE AUTOMOBILE**

**F-25400 Audincourt (Doubs)(FR)**

(72) Inventeur: **Roth, Robert**
**17, Faubourg de Belfort**
**D-70400 Hericourt(FR)**

(74) Mandataire: **Mestre, Jean et al**
**c/o CABINET LAVOIX 2, place d'Estienne d'Orves**
**F-75441 Paris Cédex 09(FR)**

(54) **Collier de raccordement pour ligne d'échappement.**

(57) Ce collier est formé par un anneau ouvert (10) prolongé par deux pattes de serrage (12, 14). Il a une section en V de façon à épouser la forme des extrémités en regard des conduits à raccorder mais en au moins deux points espacés (16, 18) il comporte une bande transversale rectiligne et plate, d'épaisseur réduite qui forme une charnière.

Les bandes sont décalées par rapport au plan médian de l'ouverture de sorte que le collier épouse la forme du conduit sans présenter de faiblesse particulière dans un plan.

FIG. 2

EP 0 403 379 A1

Il est bien connu que les lignes d'échappement de moteur, et tout particulièrement de moteur de véhicule, doivent à la fois être rigoureusement étanches, pouvoir résister à des températures élevées et surtout à des variations importantes de température et pouvoir résister à des sollicitations mécaniques sévères dues notamment aux vibrations et aux contraintes dynamiques.

Pour répondre à ces exigences le raccordement entre deux parties successives d'une ligne d'échappement peut être assuré par un collier de serrage ayant une section en V qui est emboîté sur les extrémités en contact des deux parties de la ligne, l'une de ces extrémités ayant la forme d'un bicône tandis que l'autre est simplement évasée de façon à s'appliquer contre le cône d'extrémité de la première. Le collier de serrage est constitué par deux pièces rigides, semi-cylindriques qui sont terminées a chacune de leurs exrémités par une bague de fixation et sont maintenues assemblées à l'aide de vis traversant les pattes en regard des deux colliers. On obtient ainsi un contact étroit et résistant entre le collier et les deux parties de la ligne d'échappement, mais le fait d'avoir à manipuler et à mettre en place non seulement les deux pièces du collier mais également les vis rend difficiles et longues les opérations d'assemblage du raccordement et par suite le montage de la ligne d'échappement.

La présente invention a pour but de remédier à cet inconvénient en fournissant un collier comportant un minimum de pièces et facile à mettre en place même manuellement.

Cette invention a en effet pour objet un collier de raccordement pour ligne d'échappement, ayant dans l'ensemble une section droite en forme de V, qui est formé par un anneau d'une seule pièce, ouvert et prolongé par deux pattes de serrage, comportant au moins deux bandes transversales, minces et plates, qui sont espacées l'une de l'autre et forment des charnières.

Selon un mode de réalisation préféré, les bandes transversales sont toutes décalées par rapport au plan médian de l'ouverture de l'anneau.

De préférence chacune des pattes de serrage a une section en U, ces U étant tournés l'un vers l'autre et l'une des pattes comporte un écrou interne ou une partie taraudée tandis que l'autre est munie d'un canon de guidage de la vis de serrage.

Le collier comporte en outre des moyens destructibles d'immobilisation de la vis de serrage dans l'une des pattes avant la fermeture du collier.

Le raccordement des deux parties de la ligne d'échappement est ainsi obtenu au moyen d'un dispositif qui peut être déplacé comme une seule pièce et est par suite facile à manipuler et qui, bien que formant des charnières, conserve une résistance et une rigidité suffisantes pour être utilisé sur une ligne d'échappement.

La description ci-dessous d'un mode de réalisation, donné à titre d'exemple non limitatif et représenté aux dessins annexés, fera d'ailleurs ressortir les avantages et caractéristiques de l'invention. Sur ces dessins :

La figure 1 est une vue en coupe longitudinale de la jonction entre les deux parties d'une ligne d'échappement, avant leur assemblage.

La figure 2 est une vue de côté d'un collier de raccordement selon l'invention.

La figure 3 représente une charnière du collier de raccordement, vue selon la flèche C de la Fig.2.

La figure 4 est une vue en coupe suivant la ligne 4/4 de la Fig.2.

La figure 5 est une vue en coupe suivant la ligne 5/5 de la Fig.2.

La figure 6 est une vue de dessous suivant la flèche F de la Fig.2, prise avant l'introduction de la vis.

La figure 7 est une vue analogue à la Fig.2 montrant le collier de raccordement fermé.

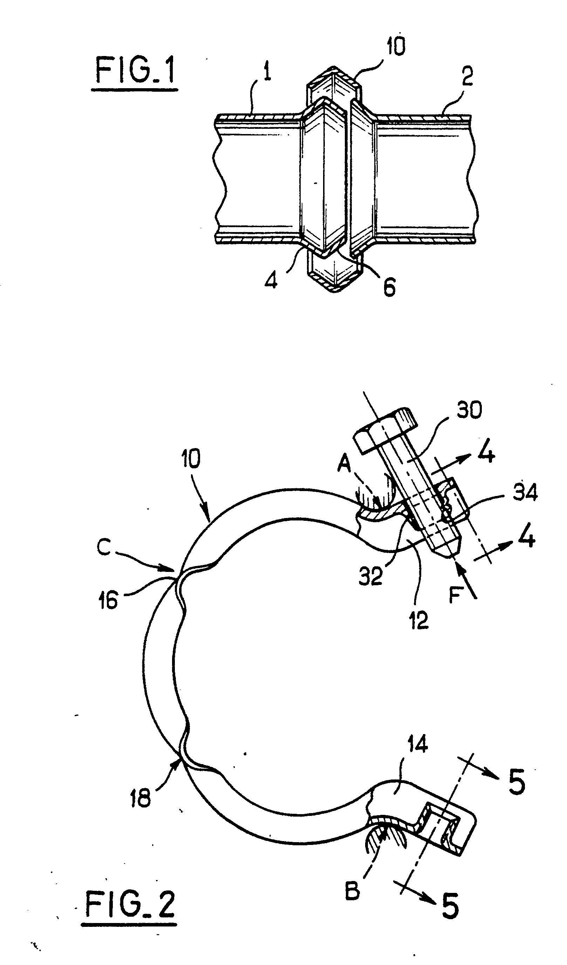

La Fig. 1 montre en coupe longitudinale les extrémités de deux conduits d'échappement 1 et 2 destinés à être assemblés bout-à-bout dans une même ligne d'échappement. Le conduit 1 est terminé par un bourrelet de section en V, ouvert vers l'intérieur, qui forme deux troncs de cônes successifs, l'un 4 évasé vers l'extérieur et l'autre 6 rétréci en direction de l'axe du conduit. Le conduit 2 a, lui, une extrémité évasée 8 qui a une forme tronconique correspondant sensiblement à celle du tronc de cône 6 du conduit 1. Les deux conduits peuvent ainsi être appliqués l'un contre l'autre de manière rigoureusement étanche tandis qu'un collier 10 les maintient dans cette position.

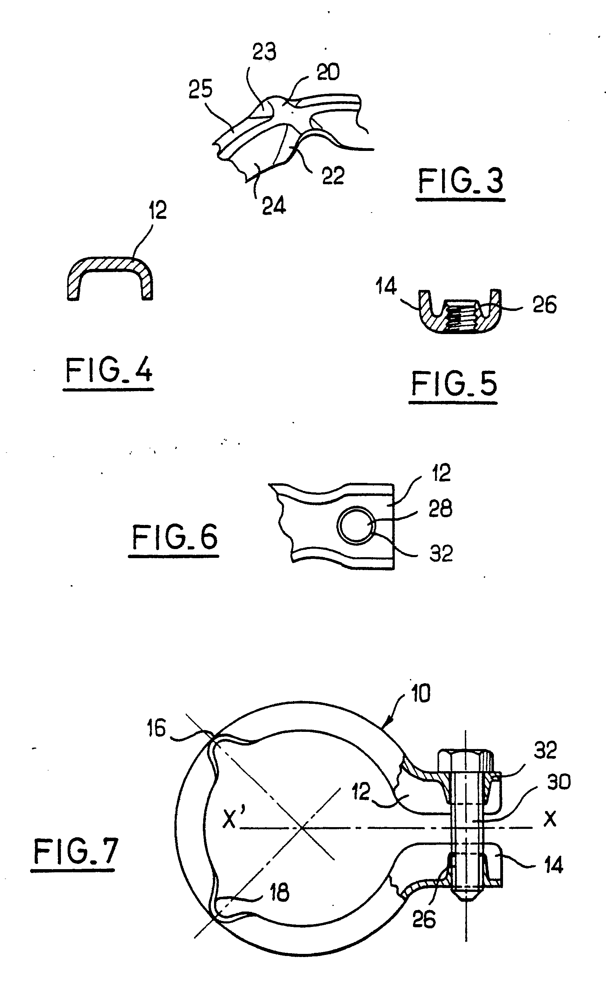

Le collier 10 qui a une section en V se rétrécissant vers l'extérieur forme, comme le montre plus particulièrement les Fig.2 et 7, un anneau métallique ouvert prolongé à ses extrémités, c'est-à-dire de part et d'autre de son ouverture, par des pattes de serrage 12, 14 dirigées vers l'extérieur et parallèles entre elles lorsque le collier est fermé.

En au moins deux points 16, 18 de sa circonférence, l'anneau 10 comporte une partie aplatie qui forme une bande transversale 20. Cette bande 20 s'étend sur toute la largeur de l'anneau 10 mais a une épaisseur de paroi inférieure à celle du reste de l'anneau. Elle est étroite et est reliée par deux surfaces inclinées et légèrement recourbées 22, 23 aux flancs latéraux 24, 25 du V de l'anneau (Fig.3).

La bande plate 20 est de préférence obtenue en redressant localement les flancs 24 et 25 de l'anneau jusque dans le plan du sommet de sa section en V, puis en amincissant, par exemple par étirage, la bande ainsi déformée et en la découpant latéralement de telle sorte que la bande 20 a simplement une longueur suffisante pour satisfaire aux conditions de tenue du collier. Dans le mode de réalisation représenté, cette longueur correspond sensiblement à la largeur du reste de l'anneau. Chacune des bandes 20 constitue ainsi un point où l'inertie dans le sens du pliage est réduite, tandis que la tenue à la traction est maintenue, de sorte qu'elle joue le rôle d'une charnière sans réduire la capacité de serrage du collier 10.

Bien entendu le collier 10 peut comporter un nombre de charnières supérieur à deux si sa dimension et/ou celle de la ligne d'échappement le rend nécessaire. Dans tous les cas les charnières sont espacées entre elles et décalées par rapport au plan médian XX′ de l'ouverture de l'anneau. En outre elles ne sont pas diamétralement opposées. Ainsi elles ne créent jamais de faiblesse particulière dans un plan.

A chacune de ses extrémités, l'anneau 10 est recourbé vers l'extérieur pour former une patte de serrage 12 ou 14 qui a une section en U (Fig.4), les deux U étant tournés l'un vers l'autre.

L'une des pattes de serrage, la patte 14 dont le mode de réalisation représenté, comporte intérieurement un écrou 26 qui peut être un écrou rapporté mais est de préférence formé dans un canon obtenu par déformation de la matière de la patte considérée.

L'autre patte de serrage, c'est-à-dire la patte 12, est percée d'un orifice 28 (Fig.6) de passage d'une vis de serrage 30 destinée à être vissée dans l'écrou 26. De préférence toutefois, la vis 30 est guidée par un canon 32 repoussé ou formé par fluoperçage ou par toute autre technique. Elle peut même être retenue dans ce canon grâce à une déformation locale de ce dernier constituant une saillie interne 34. Cette déformation est formée dans le canon après l'introduction de la vis 30 de façon à immobiliser provisoirement la vis 30 par rapport au canon 32 jusqu'à l'utilisation du collier, c'est-à-dire par exemple pendant son transport ou son stockage. La saillie 34 est telle qu'elle est détruite par la rotation de la vis 30 lors de son vissage dans l'écrou 26.

Le collier, ses charnières et ses moyens de serrage forment ainsi un tout qui peut être facilement manipulé et introduit sur la ligne d'échappement autour des extrémités des conduits 1 et 2 à réunir. Un simple effort sur les deux pattes de serrage 12 et 14, par exemple aux points A et B correspondant à la jonction de ces pattes avec la partie principale de l'anneau permet de rapprocher les deux pattes avant d'agir sur la vis 30. La forme de cône rétréci vers l'extérieur de l'extrémité de cette vis coopère avec la forme évasée de l'entrée de l'écrou 26 pour faciliter le centrage de ces deux organes et par suite le serrage de la vis. Le collier peut donc être mis en place manuellement sans aucun outillage particulier.

Le démontage du collier peut également être obtenu sans aucun outillage, simplement en dévissant la vis 30 et en écartant manuellement les pattes de serrage 12 et 14. Aucun outillage ni opération de coupe ou de sectionnage du collier n'est nécessaire.

Par contre pendant son utilisation le collier qui est en métal, est susceptible de résister à des sollicitations mécaniques sévères telles que celles dues au poids de l'échappement, aux contraintes dynamiques qui s'exercent sur celui-ci et aux vibrations ainsi qu'à des variations de température importantes telles que celles dues au cycle thermique d'un moteur. On constate que les bandes transversales décalées formant charnières donnent au collier une souplesse suffisante pour lui permettre d'être ouvert et fermé sans risque de détérioration et surtout d'épouser étroitement les parties extrêmes du conduit 1 et 2, les charnières ne créent toutefois aucune interruption dans la résistance du collier à la traction de sorte que l'anneau présente des qualités de rigidité et de résistance importantes.

## Revendications

1. Collier de raccordement pour lignes d'échappement ayant dans l'ensemble une section droite en forme de V rétréci vers l'extérieur et dont la paroi comporte au moins deux bandes transversales minces et plates (20) qui sont espacées l'une de l'autre et forment des charnières, caractérisé en ce qu'il est formé par un anneau (10) d'une seule pièce, ouvert et prolongé par deux pattes de serrage (12, 14).

2. Collier suivant la revendication 1, caractérisé en ce que les bandes transversales (20) formant charnières sont toutes décalées par rapport au plan médian de l'ouverture de l'anneau.

3. Collier suivant l'une des revendications précédentes, caractérisé en ce que la dimension transversale de chaque bande (20) est égale à la largeur de l'anneau (10).

4. Collier suivant l'une des revendications précédentes, caractérisé en ce que chaque bande transversale (20) est constituée par une portion de l'anneau (10) qui à été redressée jusqu'à son aplatissement, amincie et découpée latéralement.

5. Collier suivant l'une des revendications précédentes, caractérisé en ce qu'il est réalisé en métal.

6. Collier suivant l'une des revendications précédentes, caractérisé en ce que les pattes de serrage (12, 14) ont une section en U, les deux U étant tournés l'un vers l'autre et comportant l'un des moyens de retenue d'une vis de serrage (30), et l'autre un écrou (26).

7. Collier suivant la revendication 6, caractérisé en ce que l'écrou (26) est formé dans un canon réalisé par déformation de la matière du collier.

8. Collier suivant l'une des revendications 6 et 7, caractérisé en ce que les moyens de guidage de la vis (30) comportent un canon (32) formé par repoussage ou par une technique de déformation de la matière..

9. Collier suivant la revendication 8, caractérisé en ce que le canon de guidage de la vis comporte une saillie destructible (34) d'immobilisation de la vis avant la fermeture du collier.

FIG.1

FIG.2

FIG.3

FIG.4

FIG.5

FIG.6

FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | GB-A-836036 (LADISH CO)<br>* figures *<br>--- | 1, 2, 3, 4, 5 | F16L23/04 |
| Y<br><br>A | US-A-3630552 (BYRON)<br>* figures *<br><br>--- | 1, 2, 3, 4, 5<br>6 | |
| A | CH-A-429329 (GUTTINGER & CO)<br>* figures *<br>--- | 1, 2, 3, 4, 5 | |
| A | DE-A-3341216 (LINNEMAN)<br>* figures *<br>----- | 1, 5, 6, 7, 8 | |

**DOMAINES TECHNIQUES RECHERCHES (Int. Cl.5)**

F16L

Le présent rapport a été établi pour toutes les revendications

| Lieu de la recherche | Date d'achèvement de la recherche | Examinateur |
|---|---|---|
| LA HAYE | 01 OCTOBRE 1990 | HUBEAU M.G. |